# FASCICULE DE BREVET EUROPEEN

(11) **EP 2 909 020 B1**
(45) Date de publication et mention de la délivrance du brevet: **14.12.2016**
(21) Numéro de dépôt: 13771466.3
(22) Date de dépôt: 01.10.2013
(51) Int. Cl.: B29D 30/06

(54) **ELEMENT MOULANT D'UN MOULE POUR PNEUMATIQUE COMPORTANT UNE ZONE POREUSE**
FORMTEIL FÜR EINE REIFENFORM MIT PORÖSEM BEREICH
MOULDING ELEMENT FOR A TYRE MOULD COMPRISING A POROUS AREA

(30) Priorité: 17.10.2012 FR 1259902
(43) Date de publication de la demande: 26.08.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CALVEL, Romain, F-63040 Clermont-Ferrand Cedex 9 (FR); BLANCHET, Etienne, F-63040 Clermont-Ferrand Cedex 9 (FR)
(74) Mandataire: Demaure, Pierre-Yves
(86) Numéro de dépôt international: PCT/EP2013/070395
(87) Numéro de publication internationale: WO 2014/060209

(56) Documents cités:
- EP-A1- 0 868 955
- WO-A1-2010/076502
- DE-A1-102004 028 462
- DE-A1-102004 052 766
- US-A- 5 431 873
- US-A1- 2006 188 593

## Description

### DOMAINE DE L'INVENTION

La présente invention concerne un élément moulant obtenu par frittage et comportant des moyens d'éventation particuliers. L'élément moulant est destiné à être agencé dans un moule pour pneumatique, notamment un moule de type à secteurs. L'invention concerne également un procédé pour la réalisation d'un tel élément moulant.

### ETAT DE LA TECHNIQUE

Un moule à secteurs comprend plusieurs parties séparées qui, par rapprochement relatif, délimitent un espace de moulage globalement toroïdal. En particulier, un moule à secteurs comporte deux coquilles latérales pour le moulage des flancs du pneumatique et plusieurs secteurs périphériques situés entre les coquilles pour le moulage de la bande de roulement du pneumatique. Le rapprochement de toutes ces parties est assuré par une cinématique adaptée grâce à un mécanisme déterminé.

Pour mouler la bande de roulement, les secteurs de moule comprennent des éléments moulants. Par élément moulant, on entend un élément du moule qui comporte une surface de moulage permettant de mouler une partie de la bande de roulement d'un pneumatique.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre est ensuite agglomérée par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couches et de fusion par laser, on construit couche par couche un objet fritté.

Le document WO2010/076502 divulgue un élément moulant particulier obtenu par cette technique de frittage laser. Cet élément moulant, appelé peau, présente une faible épaisseur et est destiné à être placé dans un moule. Afin d'éviter d'emprisonner de l'air entre le moule et une ébauche crue d'un pneumatique lors d'une opération de vulcanisation, il est nécessaire de prévoir des moyens d'éventation dans l'élément moulant.

Le document US 2006/0188593 - A propose un élément moulant à faible épaisseur, dans lequel il y a au moins une zone poreuse pour l'éventation de l'air.
Ledit élément moulant n'est pas obtenu par frittage laser.

Le document US 5431873 - A décrit un secteur complet de moule ayant un revêtement de surface avec une structure poreuse obtenu par frittage, pour favoriser l'éventation de l'air.

Le document EP 868955 - A décrit un procédé de fabrication couche par couche par frittage laser d'un élément moulant pour un moule pour pneumatique, la porosité dudit élément étant contrôlée pour permettre l'éventation de l'air. Dans ce cas il s'agit de la fabrication d'un secteur moulant complet et pas d'un élément moulant à faible épaisseur.

Les documents DE102004028462 et DE102004052766 divulguent des exemples de moyens d'éventation. Plus particulièrement, ces documents divulguent une pièce de moule comportant un élément moulant obtenu par frittage laser et un élément d'interface avec le reste du moule. Cet élément d'interface est non fritté et est solidarisé avec l'élément moulant. L'élément moulant comprend dans tout son volume une pluralité de pores formant des cavités de faibles dimensions. Ces cavités sont aptes à diriger l'air vers des perçages formés dans l'élément d'interface et débouchant à l'arrière de cet élément d'interface. Or, la présence d'un grand nombre de pores dans l'élément moulant diminue la densité de matière dans cet élément et le rend plus fragile aux sollicitations mécaniques. Ainsi, les solutions d'éventation, divulguées dans les documents DE102004028462 et DE102004052766, appliquées à l'élément moulant du document WO2010/076502 rendraient cet élément trop fragile du fait de sa faible épaisseur. En outre, dans les documents DE102004028462 et DE102004052766, il est nécessaire de prévoir une opération supplémentaire de perçage de l'élément d'interface.

Il existe donc un besoin de proposer une solution d'éventation simple et économique pour un élément moulant obtenu par frittage laser et présentant une faible épaisseur.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « découpure » dans une bande de roulement, on entend l'espace délimité par des parois de matière se faisant face et distantes l'une de l'autre d'une distance non nulle.

Par « moule », on entend un ensemble de pièces séparées qui, par rapprochement relatif, permettent de délimiter un espace de moulage toroïdal.

Par « élément moulant présentant une densité supérieure ou égale à 98% », on entend que le volume de creux, formé par exemple, par des pores dans l'élément moulant, est inférieur à 2%.

Par « zone poreuse » dans l'élément moulant, on entend une zone de l'élément moulant comportant une pluralité de pores générant un volume de creux dans cette zone supérieur à 20%.

Par « pore », on entend une cavité globalement sphérique dont le diamètre est compris entre 10 et 200 micromètres.

Par « motif » sur le pneumatique, on entend un ornement sur ce pneumatique pouvant améliorer son esthétique globale et/ou donnant des informations techniques ou légales sur ce pneumatique.

### RESUME DE L'INVENTION

L'invention concerne un élément moulant comme défini dans la revendication 1 pour un moule pour pneumatique fabriqué à partir d'une poudre métallique fusionnée couche par couche. Cet élément moulant comporte une première surface destinée à mouler tout ou partie d'une surface de roulement du pneumatique et une seconde surface opposée à la première surface et destinée à être en contact avec une autre partie du moule, l'épaisseur de l'élément moulant étant comprise entre 1 et 6 millimètres, l'élément moulant ayant globalement une densité supérieure ou égale à 98%. L'élément moulant comprend au moins une première zone poreuse s'étendant dans l'épaisseur de cet élément moulant, cette première zone poreuse comportant une pluralité de pores permettant un passage d'air entre la première surface de l'élément moulant et sa seconde surface.

La première zone poreuse permet un passage d'air entre l'intérieur du moule et l'extérieur de ce moule lorsque celui-ci est fermé. Comme la densité globale de l'élément moulant reste supérieure ou égale à 98% malgré la présence de cette première zone poreuse, on s'assure d'une bonne évacuation de l'air hors du moule lors de l'opération de vulcanisation tout en conservant une bonne résistance mécanique de l'élément moulant.

Des formes préférentielles de l'element moulant sont définies dans les revendications dépendantes 2 à 4.

Dans un mode de réalisation préférentiel, la première zone poreuse forme un marquage sur l'élément moulant, ce marquage étant apte à mouler un motif sur le pneumatique.

En organisant la première zone poreuse de sorte à ce qu'elle soit apte à créer un motif prédéfini sur le pneumatique, on améliore globalement l'esthétique du pneumatique.

Dans une variante de réalisation, l'élément moulant comporte une surface latérale reliant la première surface de cet élément à sa seconde surface. L'élément moulant comprend également une seconde zone poreuse reliant la première zone poreuse de l'élément moulant à la surface latérale de cet élément, cette seconde zone poreuse formant tout ou partie de la seconde surface de l'élément moulant.

La seconde surface de l'élément moulant va venir en contact avec une autre partie du moule. Le contact entre l'élément moulant et cette autre partie n'est généralement pas entièrement étanche. En créant une seconde zone poreuse dans l'élément moulant à l'interface avec l'autre partie du moule, on améliore l'évacuation de l'air hors du moule sans avoir à percer l'autre partie du moule. On facile ainsi la fabrication du moule.

Dans une variante de réalisation, l'élément moulant comporte une pluralité de protubérances faisant saillie à partir de la première surface et destinées à mouler des découpures dans la bande de roulement du pneumatique. Au moins deux protubérances de la pluralité des protubérances se croisent sur la première surface et la première zone poreuse débouche sur la première surface au croisement des deux protubérances.

L'endroit où se produit le croisement de deux protubérances sur la première surface de l'élément est particulièrement critique puisqu'une grande quantité d'air peut s'accumuler dans cet endroit lors de la fermeture du moule sur l'ébauche crue. En faisant déboucher la zone poreuse au croisement de deux protubérances, on facilite l'évacuation de l'air hors du moule et on limite l'apparition de défauts de surface sur la bande de roulement une fois celle-ci vulcanisée.

Un autre objet de l'invention concerne un procédé comme défini dans la revendication 5 pour la fabrication couche par couche d'un élément moulant pour un moule pour pneumatique. L'élément moulant comporte une première surface destinée à mouler tout ou partie d'une surface de roulement du pneumatique et une seconde surface opposée à la première surface et destinée à être en contact avec une autre partie du moule. L'épaisseur de l'élément moulant est comprise entre 1 et 6 millimètres et cet élément moulant a globalement une densité supérieure ou égale à 98%. Le procédé de fabrication comprend une pluralité d'étapes de dépose de couches de grains métalliques et d'agglomération par fusion de tout ou partie des grains de ces couches. Pour chacune des couches de l'élément moulant, on vient créer une partie poreuse au cours de l'étape d'agglomération des grains, les parties poreuses des différentes couches de l'élément moulant se superposant pour former une zone poreuse continue s'étendant dans l'épaisseur de l'élément moulant.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** est une vue en perspective d'un élément moulant selon l'invention ;
- la **figure 2** représente schématiquement une vue en coupe de l'élément moulant de la **figure 1** selon un premier mode de réalisation ;
- la **figure 3** représente schématiquement une vue en coupe, dans un plan perpendiculaire au plan de la **figure 2****,** de l'élément moulant de la **figure 1** selon un second mode de réalisation ;
- la **figure 4** représente schématiquement une vue en coupe de l'élément moulant selon un troisième mode de réalisation ;
- la **figure 5** représente une étape du procédé de fabrication de l'élément moulant de la **figure 1****.**

Dans la description qui va suivre, des éléments sensiblement identiques ou similaires seront désignés par des références identiques.

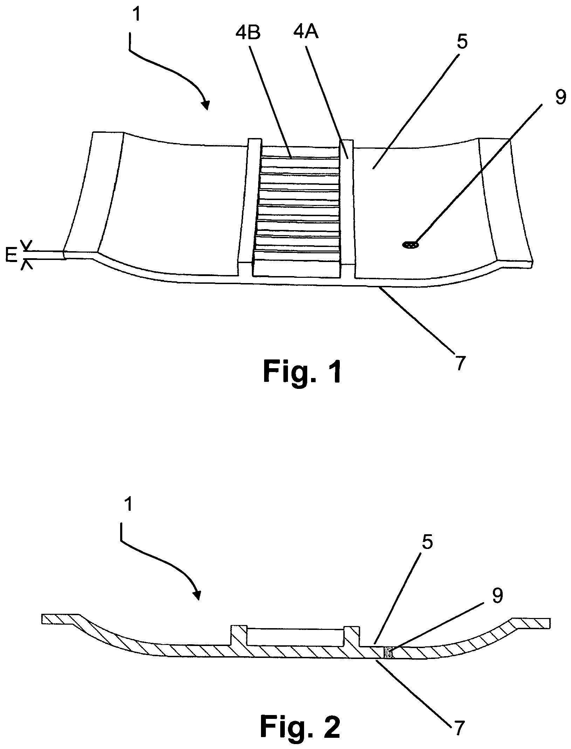

La **figure 1** présente une vue en perspective d'un élément moulant 1 fabriqué à partir d'une poudre métallique fusionnée couche par couche. Cet élément moulant comprend un corps 3 et des protubérances 4A, 4B faisant saillies à partir de ce corps 3. Parmi ces protubérances, on distingue notamment des cordons 4A et des lamelles 4B qui sont ici perpendiculaires aux cordons 4A. Par cordon, on entend une protubérance dont la largeur est supérieure ou égale à 2 mm. Un cordon est destiné à mouler une rainure dans une bande de roulement d'un pneumatique. Par lamelle, on entend une protubérance dont la largeur est inférieure à 2 mm. Une lamelle est destinée à mouler une incision dans la bande de roulement du pneumatique.

Le corps 3 comprend également une première surface 5 et une seconde surface 7 opposée à la première surface 5. La première surface 5 est destinée à mouler tout ou partie d'une surface de roulement d'un pneumatique et la seconde surface 7 est destinée à entrer en contact avec une autre partie d'un moule dans lequel est rapporté l'élément moulant 1. La première surface 5 et la seconde surface 7 définissent l'épaisseur E du corps 3. Cette épaisseur E est comprise entre 1 et 6 millimètres. Préférentiellement, cette épaisseur est comprise entre 2 et 2,5 millimètres. Cette faible épaisseur confère à l'élément moulant une légèreté et une souplesse facilitant son positionnement et son maintien lorsque celui-ci est rapporté dans une autre partie de moule.

On notera que l'élément moulant présente ici une densité supérieure ou égale à 98%. Cette densité peut être déterminée par différentes méthodes. Une de ces méthodes consiste à découper l'élément moulant 3 en différentes sections, une dizaine de sections par exemple, dans des plans perpendiculaires aux cordons 4A. Pour chaque face des sections formée par la découpe, on vient polir cette face, à l'aide d'un disque abrasif. Cette étape de polissage permet ainsi de réduire la rugosité de surface de la face ce qui permet de rendre plus visibles les parties poreuses de l'élément moulant débouchant sur cette face. On vient ensuite photographier la face et cette photographie est traitée à l'aide d'un logiciel de traitement d'image. Ce logiciel permet notamment d'obtenir une photo traitée sur laquelle apparaît des zones sombres correspondant à des parties poreuses et des zones claires correspondant à des parties non poreuses, c'est-à-dire des parties polies. Le rapport entre l'aire des zones claires à l'aire totale de la face permet de déterminer la densité pour la section de l'élément moulant associée à cette face. En répétant ces opérations de polissage, de photographie et de traitement d'images pour les différentes sections de l'élément moulant et en moyennant les résultats obtenus, il est possible de déterminer la densité globale de cet élément moulant.

Dans une méthode alternative de détermination de la densité de l'élément moulant, on vient découper l'élément moulant 3 dans la longueur du cordon 4A. La face formée par cette découpe est ensuite polie puis on observe sur cette face la porosité au niveau de dix zones préalablement déterminées sur cette face.

L'élément moulant 1 comprend une première zone poreuse 9. Comme cela est visible à la figure 2, cette première zone poreuse 9 s'étend dans l'épaisseur de l'élément moulant 1 et relie ainsi la première surface 5 à la seconde surface 7. Cette zone poreuse 9 comprend une pluralité de pores permettant un passage d'air entre la première surface 5 et la seconde surface 7. La quantité de pores dans la zone poreuse est telle que cette zone poreuse présente une densité inférieure à 80%.

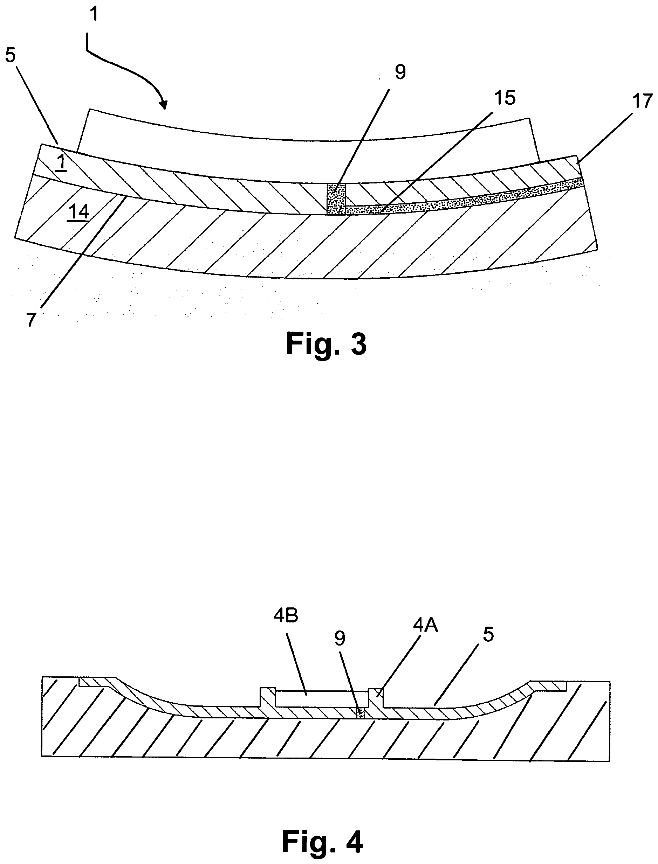

La **figure 3** est une vue en coupe de l'élément moulant 1 de la **figure 1** selon un second mode de réalisation, dans un plan perpendiculaire au plan de la **figure 2****.** L'élément moulant 1 est ici représenté comme un élément rapporté sur une autre partie 14 du moule. Plus particulièrement, dans ce mode de réalisation, l'élément moulant 1 comprend une seconde zone poreuse 15. Cette seconde zone poreuse 15 forme ici une partie de la seconde surface 7 de l'élément moulant 1. Plus particulièrement, cette zone poreuse 15 relie la cavité 9 à une surface latérale 17 de cet élément moulant 1. La surface latérale 17 est la surface de l'élément 1 qui relie la première surface 5 à la seconde surface 7. De cette manière on réalise une évacuation de l'air hors du moule, par l'intermédiaire de la première zone poreuse 9 et de la seconde zone poreuse 15 et ceci sans avoir à percer l'autre partie 14 du moule.

La **figure 4** représente un troisième mode de réalisation dans lequel la première zone 9 débouche au croisement de deux protubérances 4A, 4B. De cette manière, on améliore l'évacuation de l'air à proximité des protubérances lorsque le moule se referme sur l'ébauche crue.

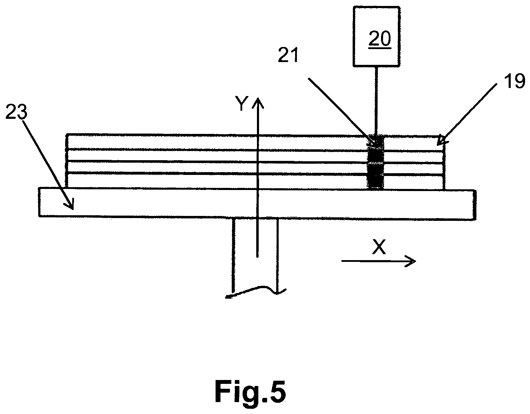

La **figure 5** présente une étape d'un procédé de fabrication couche par couche de l'élément moulant de la **figure 1****.** Ce procédé comprend une pluralité d'étapes de dépose de couches 19 de grains métalliques et d'agglomération par fusion à l'aide d'un laser 20 de tout ou partie des grains de ces couches. Pour chacune des couches de l'élément moulant, on vient créer une partie poreuse 21 au cours de l'étape d'agglomération des grains. Les parties poreuses des différentes couches se superposant pour former une zone poreuse continue s'étendant dans l'épaisseur de l'élément moulant. Ces parties poreuses peuvent se superposer exactement dans l'épaisseur de l'élément moulant comme cela est représenté à la **figure 5****.** En variante, il peut exister un décalage entre les parties poreuses selon une direction X perpendiculaire à l'axe de symétrie Y d'un plateau support 23 supportant les différentes couches 19.

Afin de générer ces différentes parties poreuses, il est possible de modifier certains paramètres du laser 20 au cours de l'agglomération par fusion des couches. Par exemple, il est possible de modifier la vitesse de laser et/ou le diamètre du faisceau laser et/ou la puissance de ce laser et/ou l'écartement des vecteurs du laser.

L'invention n'est pas limitée aux exemples décrits et représentés et diverses modifications peuvent y être apportées sans sortir de son cadre.

Sur la **figure 1****,** on a représenté la première zone poreuse formant un disque sur la première surface de l'élément moulant. En variante, la première zone poreuse forme un marquage destiné à mouler un motif de type logo, mot ou autres, sur cette première zone poreuse.

## Revendications

1. Elément moulant pour un moule pour pneumatique fabriqué à partir d'une poudre métallique fusionnée couche par couche, l'élément moulant (1) comportant une première surface (5) destinée à mouler tout ou partie d'une surface de roulement du pneumatique et une seconde surface (7) opposée à la première surface et destinée à être en contact avec une autre partie du moule, l'épaisseur (E) de l'élément moulant étant comprise entre 1 et 6 millimètres, l'élément moulant ayant globalement une densité supérieure ou égale à 98%, **caractérisé en ce que** l'élément moulant comprend au moins une première zone poreuse (9) s'étendant dans l'épaisseur de cet élément moulant, cette première zone poreuse comportant une pluralité de pores permettant un passage d'air entre la première surface de l'élément moulant et sa seconde surface.

2. Elément moulant selon la revendication 1, dans lequel la première zone poreuse (9) forme un marquage sur l'élément moulant, ce marquage étant apte à mouler un motif sur le pneumatique.

3. Elément moulant selon l'une des revendications 1 à 2, dans lequel l'élément moulant comporte une surface latérale (17) reliant la première surface (5) de cet élément à sa seconde surface (7), **caractérisé en ce que** l'élément moulant comprend une seconde zone (15) s'étendant de la première zone poreuse (9) de l'élément moulant à la surface latérale de cet élément, cette seconde zone poreuse formant tout ou partie de la seconde surface de l'élément moulant.

4. Elément moulant selon l'une quelconque des revendications 1 à 3, dans lequel cet élément moulant comporte une pluralité de protubérances (4A, 4B) faisant saillie à partir de la première surface (5) et destinées à mouler des découpures dans la bande de roulement du pneumatique, au moins deux protubérances de la pluralité des protubérances se croisant sur cette première surface, **caractérisé en ce que** la première zone poreuse (9) débouche sur la première surface (5) au croisement des deux protubérances.

5. Procédé de fabrication couche par couche d'un élément moulant pour un moule pour pneumatique, l'élément moulant comportant une première surface destinée à mouler tout ou partie d'une surface de roulement du pneumatique et une seconde surface opposée à la première surface et destinée à être en contact avec une autre partie du moule, l'épaisseur de l'élément moulant étant comprise entre 1 et 6 millimètres, l'élément moulant ayant globalement une densité supérieure ou égale à 98%, le procédé de fabrication comprenant une pluralité d'étapes de dépose de couches (19) de grains métalliques et d'agglomération par fusion de tout ou partie des grains de ces couches **caractérisé en ce que** pour chacune des couches (19) de l'élément moulant, on vient créer une partie poreuse (21) au cours de l'étape d'agglomération des grains, les parties poreuses des différentes couches de l'élément moulant se superposant pour former une zone poreuse continue s'étendant dans l'épaisseur de l'élément moulant.

## Patentansprüche

1. Formteil für eine Reifenform, das schichtweise aus einem geschmolzenen Metallpulver hergestellt wird, wobei das Formteil (1) eine erste Fläche (5), die dazu bestimmt ist, eine Lauffläche des Reifens vollständig oder teilweise zu formen, und eine zweite Fläche (7), die sich gegenüber der ersten Fläche befindet und dazu bestimmt ist, mit einem anderen Teil der Form in Kontakt zu sein, aufweist, wobei die Dicke (E) des Formteils zwischen 1 und 6 Millimetern liegt, wobei das Formteil insgesamt eine Dichte hat, die größer oder gleich 98 % ist, **dadurch gekennzeichnet, dass** das Formteil mindestens einen porösen Bereich (9) aufweist, der sich in der Dicke dieses Formteils erstreckt, wobei dieser erste poröse Bereich eine Vielzahl von Poren aufweist, die einen Luftdurchlass zwischen der ersten Fläche des Formteils und dessen zweiter Fläche erlauben.

2. Formteil nach Anspruch 1, wobei der erste poröse Bereich (9) eine Markierung auf dem Formteil bildet, wobei diese Markierung geeignet ist, ein Muster auf dem Reifen abzuformen.

3. Formteil nach einem der Ansprüche 1 bis 2, wobei das Formteil eine Seitenfläche (17) aufweist, welche die erste Fläche (5) dieses Teils mit dessen zweiter Fläche (7) verbindet, **dadurch gekennzeichnet, dass** das Formteil einen zweiten Bereich (15) aufweist, der sich von dem ersten porösen Bereich (9) des Formteils zu der Seitenfläche dieses Teils erstreckt, wobei dieser zweite poröse Bereich vollständig oder teilweise die zweite Fläche des Formteils bildet.

4. Formteil nach einem der Ansprüche 1 bis 3, wobei dieses Formteil eine Vielzahl von Vorsprüngen (4A, 4B) aufweist, die von der ersten Fläche (5) hervorstehen und dazu bestimmt sind, Einschnitte in der Lauffläche des Reifens zu formen, wobei mindestens zwei Vorsprünge der Vielzahl von Vorsprüngen sich auf dieser ersten Fläche kreuzen, **dadurch gekennzeichnet, dass** der erste poröse Bereich (9) auf die erste Fläche (5) am Kreuzungspunkt der beiden Vorsprünge mündet.

5. Verfahren zur schichtweisen Herstellung eines Formteils für eine Reifenform, wobei das Formteil eine erste Fläche, die dazu bestimmt ist, eine Lauffläche des Reifens vollständig oder teilweise zu formen, und eine zweite Fläche, die sich gegenüber der ersten Fläche befindet und dazu bestimmt ist, mit einem anderen Teil der Form in Kontakt zu sein, aufweist, wobei die Dicke des Formteils zwischen 1 und 6 Millimetern liegt, wobei das Formteil insgesamt eine Dichte hat, die größer oder gleich 98 % ist, wobei das Herstellungsverfahren eine Vielzahl von Schritten des Aufbringens von Schichten (19) aus Metallkörnern und der Agglomeration durch Verschmelzung aller oder eines Teils der Körner dieser Schichten umfasst, **dadurch gekennzeichnet, dass** während des Schritts der Agglomeration der Körner für jede der Schichten (19) des Formteils ein poröser Bereich (21) geschaffen wird, wobei die porösen Bereiche der verschiedenen Schichten des Formteils sich überlagern, um einen zusammenhängenden porösen Bereich zu bilden, der sich in der Dicke des Formteils erstreckt.

## Claims

1. Moulding element for a tyre mould manufactured from a metallic powder fused together layer by layer, the moulding element (1) comprising a first surface (5) intended to mould all or part of a tread surface of the tyre and a second surface (7) opposite to the first surface and intended to be in contact with another part of the mould, the thickness (E) of the moulding element being comprised between 1 and 6 millimetres, the moulding element overall having a density greater than or equal to 98%, **characterized in that** the moulding element comprises at least one first porous area (9) extending into the thickness of this moulding element, this first porous area comprising a plurality of pores allowing air to pass between the first surface of the moulding element and the second surface thereof.

2. Moulding element according to Claim 1, in which the first porous area (9) forms a marking on the moulding element, this marking being able to mould a pattern on the tyre.

3. Moulding element according to one of Claims 1 and 2, in which the moulding element comprises a lateral surface (17) connecting the first surface (5) of this element to the second surface (7) thereof,
**characterized in that** the moulding element comprises a second area (15) extending from the first porous area
(9) of the moulding element to the lateral surface of this element, this second porous area forming all or part of the second surface of the moulding element.

4. Moulding element according to any one of Claims 1 to 3, in which this moulding element comprises a plurality of protrusions (4A, 4B) projecting from the first surface (5) and intended to mould cuts in the tread of the tyre, at least two protrusions of the plurality of protrusions intersecting on this first surface, **characterized in that** the first porous area (9) opens onto the first surface (5) at the intersection of the two protrusions.

5. Method for the layer-by-layer manufacture of a moulding element for a tyre mould, the moulding element comprising a first surface intended to mould all or part of a tread surface of the tyre and a second surface opposite to the first surface and intended to be in contact with another part of the mould, the thickness of the moulding element being comprised between 1 and 6 millimetres, the moulding element overall having a density greater than or equal to 98%, the method of manufacture comprising a plurality of steps of applying layers (19) of metallic particles and of agglomerating all or some of the particles of these layers by fusion, **characterized in that**, for each of the layers (19) of the moulding element, a porous part (21) is created during the step of agglomerating the particles, the porous parts of the various layers of the moulding element being superposed with one another to form a continuous porous area extending into the thickness of the moulding element.
